Europäisches Patentamt

European Patent Office

Office européen des brevets

(11) Veröffentlichungsnummer: **0 271 757**
**A2**

(12) # EUROPÄISCHE PATENTANMELDUNG

(21) Anmeldenummer: 87117721.8

(51) Int. Cl.⁴: **B64C 23/06**

(22) Anmeldetag: 01.12.87

(30) Priorität: 17.12.86 DE 3643070

(43) Veröffentlichungstag der Anmeldung:
22.06.88 Patentblatt 88/25

(84) Benannte Vertragsstaaten:
FR GB NL

(71) Anmelder: Messerschmitt-Bölkow-Blohm
Gesellschaft mit beschränkter Haftung
Robert-Koch-Strasse
D-8012 Ottobrunn(DE)

(72) Erfinder: Martens, Johann
Feldstrasse 41
D-2870 Delmenhorst(DE)
Erfinder: May, Peter
Langwedeler Strasse 18b
D-2800 Bremen(DE)
Erfinder: Schwetzler, Detlev
Gneisenaustrasse 26
D-2870 Delmenhorst(DE)

(54) **Ausfahrbare Flügelrandklappe.**

(57) Die Erfindung bezieht sich auf einen aerodynamischen Strömungskörper, der am Ende einer Tragfläche eines Luftfahrzeuges schwenk- und/oder ausfahrbar angeordnet ist.

Fig. 1

## Ausfahrbare Flügelrandklappe

Die Erfindung bezieht sich auf einen aerodynamischen Strömungskörper, der am Spannweitende jeweils einer Tragfläche eines Luftfahrzeuges dreh-und/oder schwenkbar angeordnet ist.

Es ist bekannt, daß sich die Bemühungen, die aerodynamischen Leistungsdaten von Flugzeugen zu verbessern, auf Bereiche großer Energieverluste konzentrieren. Einer dieser Bereiche stellt die Flügelrandumströmung dar. Sie entsteht durch den Druckausgleich zwischen der Sog-und der Druckseite eines Tragflügels, und erzeugt am Flügelende stromabwärts gerichtete Wirbelbänder. Für die Erzeugung dieser Wirbelbänder muß während des Fluges ständig Arbeit verrichtet werden, die um so größer wird, je größer der vom Flügel erzeugte Auftrieb ist. So stellt der hier erzeugte Strömungswiderstand bei Hochauftriebsflügeln einen großen Anteil des Gesamtwiderstandes dar, für dessen Überwindung ein entsprechender Anteil an Triebwerksleistung benötigt wird.

Die bekannten Vorschläge zur Verringerung der genannten Energieverluste am Flügelende weisen verschiedene Nachteile auf. Starre Einrichtungen, wie beispielsweise "Wing Tip Fences", Winglets" sowie eine von der Flügelgeometrie abweichende Formgebung der Flügelendbereiche (D-Gbm 73 22 177, US-PS 4,046,336), und bewegliche Einrichtungen, wie die an dem Hochauftriebsflügel der D-AS 21 49 956, erzeugen zwar bei Start und Landung einen Auftriebs-bzw. Widerstandsgewinn, während der Reiseflugphase macht ihr zusätzliches Gewicht und ihr zusätzlicher Strömungswiderstand sich nachteilig bemerkbar. Insbesondere mit dem aus der D-AS 21 49 956 bekannten Hochauftriebsflügel wird im Reiseflugbetrieb des Flugzeuges lediglich eine, den Flügel-Strömungswiderstand erhöhende Flügelstreckung erreicht.

Aufgabe der Erfindung ist es, die genannten Nachteile zu vermeiden, und eine Verringerung des durch die Tragflächenrandumströmung induzierten Widerstandes zu erzielen.

Die erfinderische Lösung dieser Aufgabe ergibt sich aus den Merkmalen des Hauptanspruches. Vorteilhafte Ausgestaltungen und Weiterbildungen sind den Unteransprüchen zu entnehmen.

Von besonderer Bedeutung für den Erfindungsgedanken ist, daß ein Strömungskörper so an dem Tragflächende befestigt wird, daß er in Abhängigkeit von den aerodynamischen Erfordernissen der unterschiedlichen Flugphasen steuerbar ein-und ausgefahren werden kann. Die Anstellwinkel a in und b quer zur Flügelebene sind dabei so ansteuerbar, daß die Verluste durch den induzierten Widerstand der Tragfläche stark verringert werden. Im Reiseflug hingegen, soll die Flügelrandklappe 1 im eingefahrenen Zustand die Profilgeometrie des Tragflügelendes so wenig wie möglich stören, um keine zusätzlichen Strömungswiderstand zu erzeugen.

Die in den kennzeichnenden Teilen der Patentansprüche genannten Merkmale lassen sich mit Hilfe der Zeichnung erläutern. Es zeigen:

Fig. 1 eine Ansicht eines Traflügels mit der erfindungsgemäßen Flügelrandklappe im ausgeschwenktem Zustand,

Fig. 2 einen Tragflügel mit Flügelrandklappe, Abdeckkörper und Stelleinrichtung,

Fig. 3 ein Meßwertdiagramm mit dem Auftriebsbeiwert CL in Abhängigkeit vom Anstellwinkel ALPHA,

Fig. 4 ein Meßwertdiagramm mit dem Auftriebsbeiwert CL in Abhängigkeit vom Widerstandsbeiwert CD,

Fig. 5 ein Meßwertdiagramm mit dem Auftriebsbeiwert CL in Abhängigkeit vom idealisierten Widerstandsbeiwert CDP,

Fig. 6 ein Meßwertdiagramm mit dem Auftriebsbeiwert CL in Abhängigkeit von CA/CW, dem Reziprokwert der Gleitzahl,

Fig. 7 ein Meßwertdiagramm mit dem idealisierten Widerstandsbeiwert in Abhängigkeit von $CL^2$, dem Quadrat des Auftriebsbeiwertes

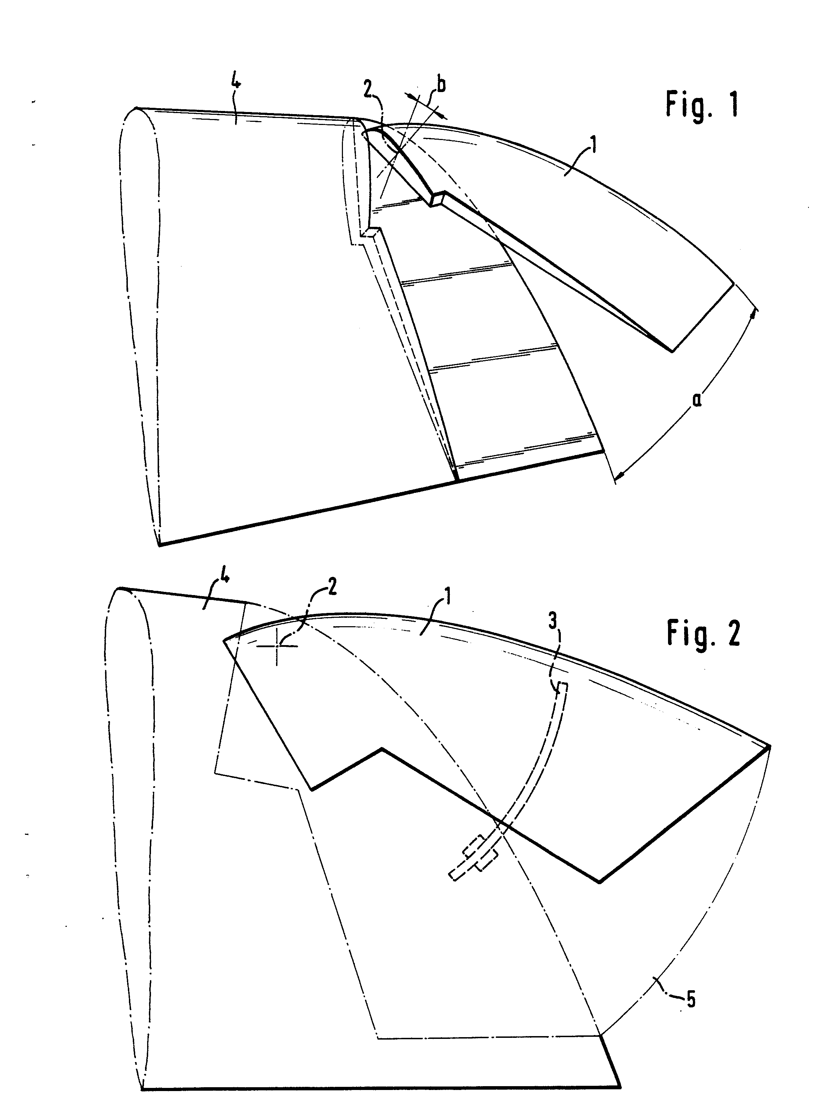

In Figure 1 ist der Endbereich einer Tragfläche 4 dargestellt, bei dem eine Flügelrandklappe 1 auf der Tragflächenoberseite angeordnet ist, während in einer anderen Ausgestaltung der Erfindung die Flügelrandklappe 1 im eingefahrenen Zustand die Unterseite des Flügelendes bildet.

Die Flügelrandklappe 1 ist mit Hilfe eines Stellsystems 3 in Abhängigkeit der Erfordernisse der unterschiedlichen Flugphasen um den Winkel a in, und um den Winkel b quer zur Tragflächenebene anstellbar. Im eingefahrenen Zustand wird durch die Flügelrandklappe 1 die Profilgeometrie des Tragflügels 4 in dessen Endbereich nicht gestört. Dazu ist die Flügelrandklappe 1 so angeordnet, daß ihre Profilnase oberhalb der Tragflügelnase ansetzt. Im einer weiteren Ausgestaltung der Erfindung ist die Profilnase der Flügelrandklappe 1 der Tragflügelprofilnase vorgelagert. Die Profiltiefe der Flügelrandklappe 1 kann dabei geringer sein, als die Profiltiefe des Tragflügelendbereiches.

Die in Fig. 2 dargestellte Stelleinrichtung 3 für die Ein-und Ausfahrbewegung der Flügelrandklappe 1 ist in einer vorteilhaften Ausgestaltung der Erfindung innerhalb der Tragfläche 4 untergebracht. Sie besteht aus einer Stellmechanik, welche durch elek trohydraulische Stellglieder oder einem Spindelantrieb antreibbar ist.

Ist die Flügelrandklappe 1 in einer weiteren Ausgestaltung der Erfindung um eine Drehachse 2 schwenkbar angeordnet, so ist diese Drehachse 2 an der stromaufwärts liegenden Seite des Tragflügels 4 angeordnet und weist einen Anstellwinkel a zur Tragflächenebene auf.

Der beim Ausfahren und/oder Ausschwenken der Flügelrandklappe 1 zwischen dieser und dem Tragflügelende entstehende Spalt ist in einem anderen Ausführungsbeispiel der Erfindung mit Hilfe eines in der Tragfläche 4 und/oder der Flügelrandklappe 1 versenkbaren Abdeckkörpers 5 abdeckbar.

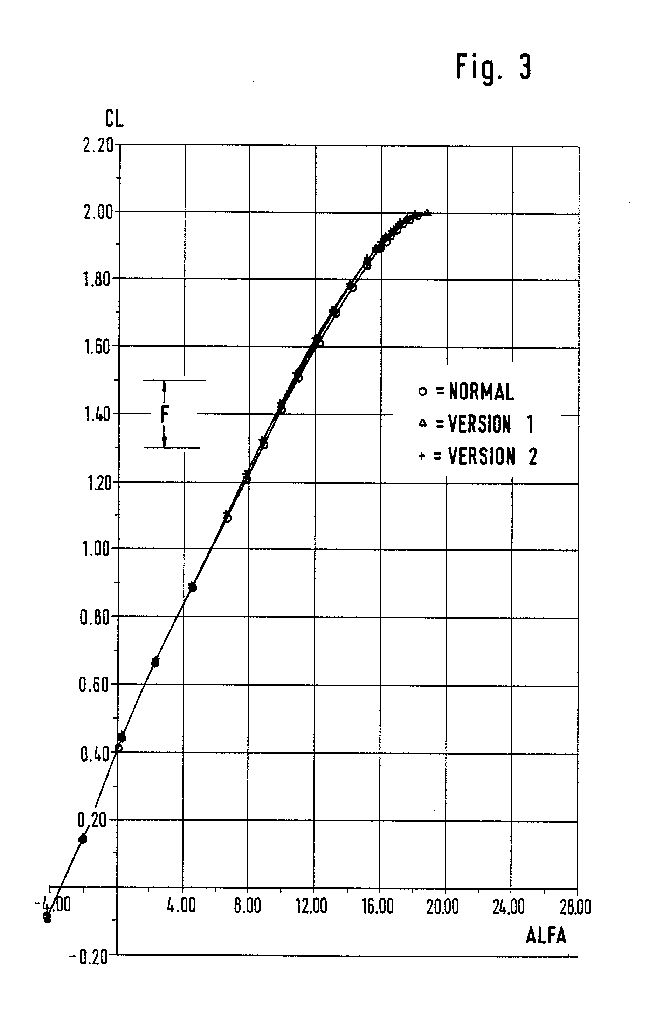

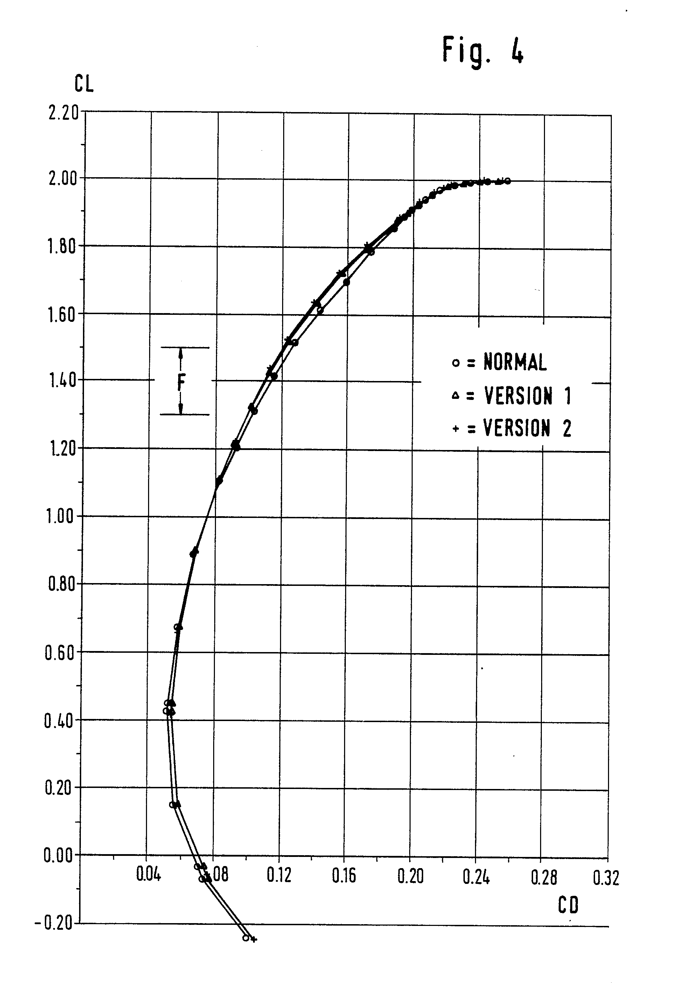

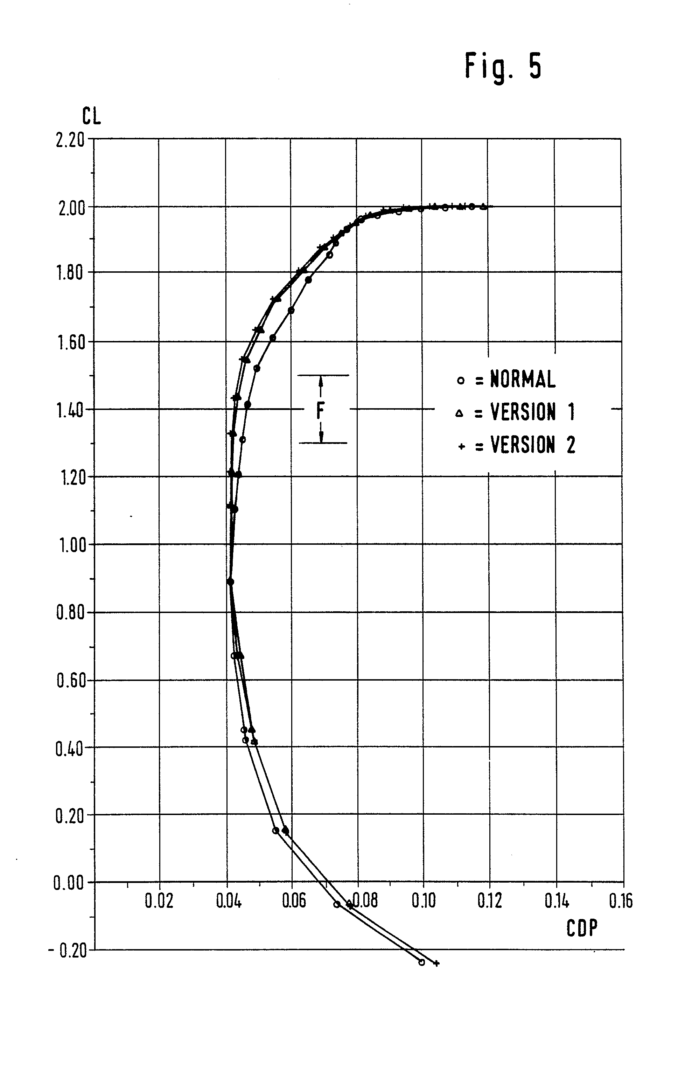

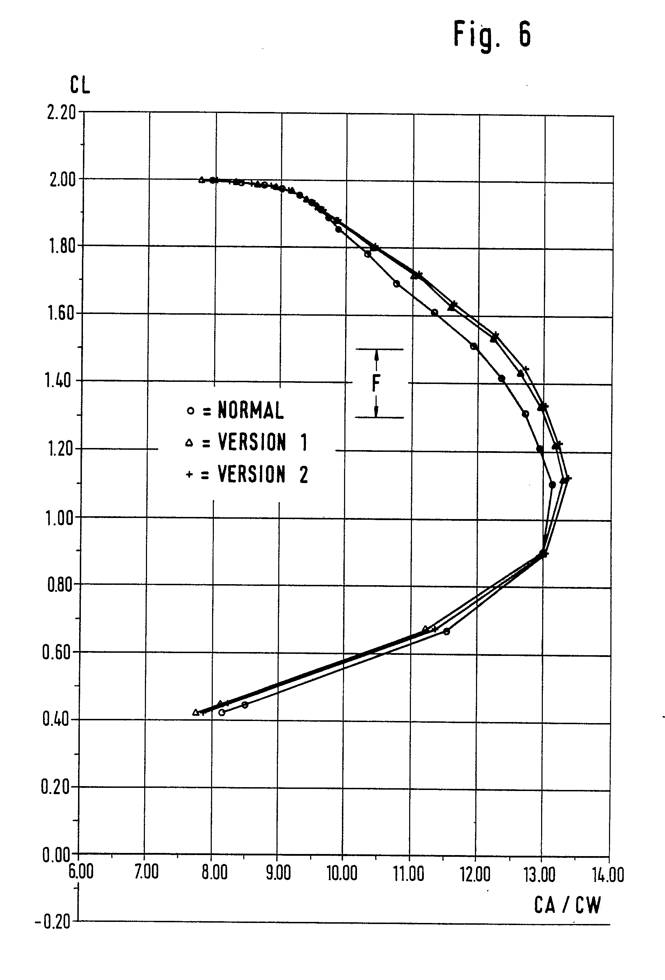

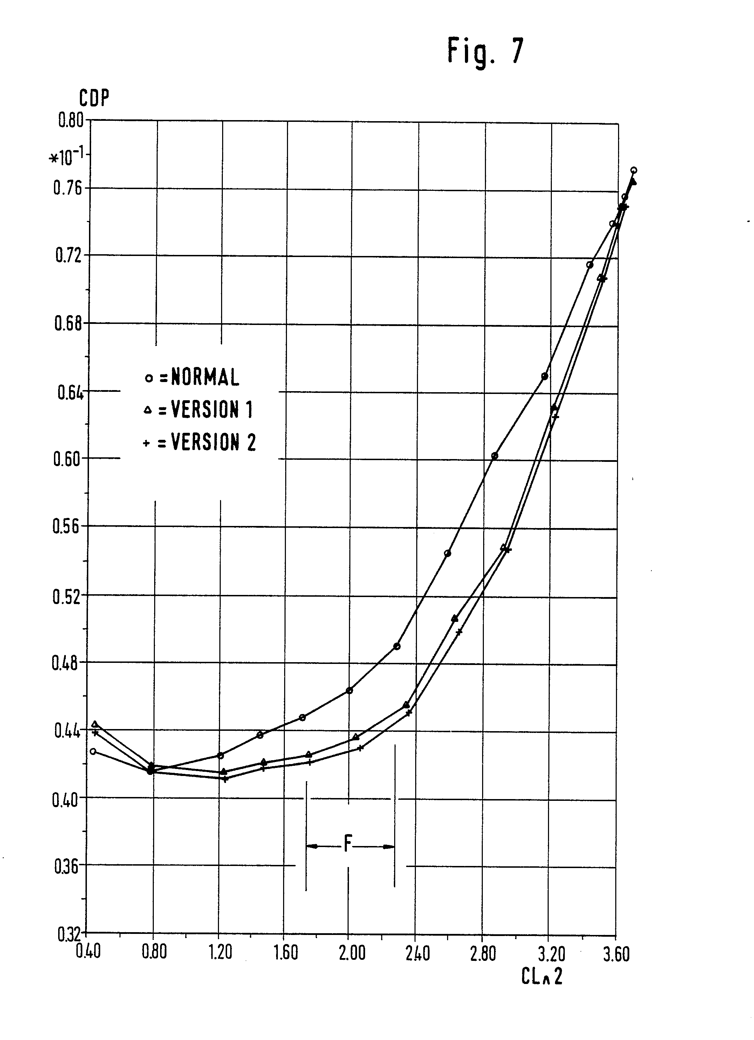

In den Figuren 3 bis 7 sind Meßergebnisse aus Windkanalversuchen graphisch dargestellt, die zeigen, daß mit Flügelrandklappen unterschiedlicher Gemoetrie (VERSION 1 VERSION 2) zum Teil erhebliche Verbesserungen der aerodynamischen Kennwerte eines Tragflügels für ein Düsenverkehrsflugzeug gegenüber einer Vergleichsmessung (NORMAL) ohne ausgefahrener Flügelrandklappe 1 erreicht werden konnten. In den Diagrammen ist mit "F" der Bereich gekennzeichnet, der beim Betrieb des untersuchten Flugzeugflügels erflogen wird.

## Ansprüche

1. Flügelrandklappe für Tragflächen von Luftfahrzeugen zur steuerbaren Beeinflussung der Flügelrandumströmung, bestehend aus einem jeweils am Ende der Tragflächespannweite angeordneten aerodynamischen Strömungskörper sowie einer Einrichtung für die VerStelung dieses Strömungskörpers, **dadurch gekennzeichnet,** daß die Flügelrandklappe (1) schwekbar und/oder drehbar am Tragflächende befestigt ist, daß die Flügelrandklappe (1) im eingefahrenen Zustand das Ober-oder das Unterteil des Tragflächenendes bildet, daß im eingefahrenen und/oder eingeschwenkten Zustand der Profilgeometrieverlauf der Tragfläche (4) am Ort der Flügelrandklappe (1) durch diese nicht gestört wird und daß die Flügelrandklappe (1) um einen Anstellwinkel (a), in, und um einen Anstellwinkel (b) quer zur Trafgläschenebene in Abhängigkeit von unterschiedlichen Flugphasen einstellbar ist.

2. Flügelrandklappe nach Anspruch 1, **dadurch gekennzeichnet,** daß die Stelleinrichtung (3) für die Ein-und Ausfahrbewegung und/oder der Schwenkbewegung der Flügelrandklappe 01) innerhalb der Tragfläche (4) angeordnet ist.

3. Flügelrandklappe nach Anspruch 1 und 2, **dadurch gekennzeichnet,** daß dei im ausgefahrenen und/oder ausgeschwenkten Zustand zwischen der Flügelrandklappe (1) und dem Tragflächenende entstehende Spalte mit Hilfe eines ausfahrbaren Abdeckkörper (5) abdeckbar ist.

4. Flügelrandklappe nach Anspruch 1 bis 3, **dadurch gekennzeichnet,** daß der Abdeckkörper (5) der Tragfläche (4) und/oder der Flügelrandklappe (1) versenkbar ist.

5. Flügelrandklappe nach Anspruch 1 bis 4, **dadurch gekennzeichnet,** daß die Stelleinrichtung (3) für die Schwenk-und/oder Ausfahrbewegung der Flügelrandklappe (1) mit Hilfe eines elektrohydraulischen Stellsystems betreibbar ist.

6. Flügelrandklappe nach Anspruch 1 bis 5, **dadurch gekennzeichnet,** daß die Stelleinrichtung (3) für die Schwenk-und/oder Ausfahrbewegung mit Hilfe eines Spindelantriebes betreibbar ist.

7. Flügelrandklappe nach Anspruch 1 bis 6, **dadurch gekennzeichnet,** daß die Drehachse (2) der Schwenkeinrichtung der Flügelrandklappe (1) einen Anstellwinkel (a) zur Tragflächenebene aufweist.

8. Flügelrandklappe nach Anspruch 7, **dadurch gekennzeichnet,** daß die Drehachse (2) der Schwenkeinrichtung der Flügelrandklappe (1) an der stromaufwärts liegenden Seite der Tragfläche (4) angeordnet ist.

9. Flügelrandklappe nach Anspruch 1 bis 8, **dadurch gekennzeichnet,** daß die Profilnase der Flügelrandklappe (1) im eingeschwenkten Zustand oberhalb der Tragflächenprofilnase ansetzt.

10. Flügelrandklappe nach Anspruch 1 bis 9, **dadurch gekennzeichnet,** daß die Profilnase der Flügelrandklappe (1) im eingeschwenkten Zustand dieTragflächenprofilnase darstellt.

11. Flügelrandklappe nach Anspruch 1 bis 10, **dadurch gekennzeichnet,** daß die Profiltiefe der Flügelrandklappe (1) von der Profiltiefe des Tragflügelendes abweicht.

Bezugszeichenliste

1:Flügelrandklappe
2:Drehachse
3:Stelleinrichtung
4:Tragfläche
5:Abdeckkörper
a: Anstellwinkel der Flügelrandklappe in der Tragflächenebene
b:Anstellwinkel der Flügelrandklappe zur Tragflächenebene

Fig. 1

Fig. 2

Fig. 3

Fig. 4

# Fig. 5

Fig. 6

# Fig. 7